(19) Europäisches Patentamt / European Patent Office / Office européen des brevets

(11) EP 3 483 984 A1

(12) EUROPÄISCHE PATENTANMELDUNG

(43) Veröffentlichungstag:
15.05.2019 Patentblatt 2019/20

(51) Int Cl.:
*H01R 11/28* (2006.01)    *H01R 4/48* (2006.01)

(21) Anmeldenummer: 18192691.6

(22) Anmeldetag: 05.09.2018

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(30) Priorität: 08.11.2017 DE 102017219820

(71) Anmelder: Robert Bosch GmbH
70442 Stuttgart (DE)

(72) Erfinder:
• Szaloki, Imre
  1152 Budapest (HU)
• Palai, Tamas
  1103 Budapest (HU)

(54) **SELBSTSPERRENDE BATTERIEPOLKLEMME**

(57) Die Erfindung betrifft eine selbstsperrende Batteriepolklemme (10) mit einem Klemmkörper (12) zur zumindest teilweise Aufnahme eines Batteriepols (18), einem Befestigungsteil (26) und einem Verriegelungsteil (28), wobei das Verriegelungsteil (28) dazu eingerichtet ist, an den Batteriepol (18) anzugreifen, und wobei das Befestigungsteil (26) derart mit dem Verriegelungsteil (28) zusammenwirkt, dass ein Betätigen des Befestigungsteils (26) ein Schwenken des Verriegelungsteils (28) um eine erste Schwenkachse bewirkt.

**Fig. 1**

EP 3 483 984 A1

Printed by Jouve, 75001 PARIS (FR)

**Beschreibung**

Die Erfindung betrifft eine selbstsperrende Batteriepolklemme, insbesondere eine Batteriepolklemme zum Anschließen an einen Pol einer Fahrzeugbatterie.

Stand der Technik

Batteriepolklemmen werden bspw. dazu verwendet, um elektronische Batteriesensoren oder Erdungskabel an den Batteriepol eines Kraftfahrzeugs anzuschließen. Die Hauptfunktion der Batteriepolklemme besteht darin, während des Betriebs der Batterie einen elektrischen Strom von dem Batteriepol zu dem Erdungskabel oder dem Batteriesensor zu leiten. Hierbei hält die Batteriepolklemme Ziehkräften des Erdungskabels, des Batteriesensors und anderer Lasten beim Zusammenbau und bei der Wartung während der Lebensdauer des Fahrzeugs, in dem die Batterie verbaut ist, stand.

Zu beachten ist, dass bekannte, derzeit erhältliche Batteriepolklemmen, die üblicherweise einen Klemmmechanismus umfassen, einige Befestigungsanforderungen der Erstausrüster bzw. OEMs (OEM: Original Equipment Manufanufacturer) nicht erfüllen. Daher wird eine universelle Lösung gesucht, die die Anforderungen aller Kunden erfüllen.

Weiterhin ist zu berücksichtigen, dass Anforderungen der OEMs hinsichtlich des Schraubmoments verschieden sind. Daher wird angestrebt, eine Batteriepolklemme zu entwickeln, die weniger abhängig vom Anziehmoment ist.

Alle Batteriepolklemmen, die zur Zeit verfügbar sind, basieren auf Reibung, was bedeutet, dass die Stärke der Verbindung hauptsächlich auf der Kraft, die auf den Pol durch Schrauben oder durch einen Auslegerarm ausgeübt wird, der Form des Klemmkörpers und dem Reibungskoeffizienten zwischen dem Pol und dem Klemmmechanismus beruht. Daher sind diese Verbindung hinsichtlich der mechanischen Fixierung beschränkt und in hohem Maße abhängig von der Oberflächenqualität und Materialgrößen, wie bspw. einem plastischen Verformen.

Offenbarung der Erfindung

Vor diesem Hintergrund wird eine selbstsperrende Batteriepolklemme nach Anspruch 1 vorgestellt. Ausführungsformen ergeben sich aus den abhängigen Ansprüchen und der Beschreibung.

Die vorgestellte selbstsperrende Batteriepolklemme kommt bspw. bei einer Batterie eines Kraftfahrzeugs zum Einsatz und dient dazu, einen Anschluss an einen Pol dieser Batterie bereitzustellen bzw. diesen zu kontaktieren, so dass an diesen bspw. ein Erdungskabel oder ein Sensorkabel angeschlossen werden kann. Dabei weist die beschriebene Batteriepolklemme einen Klemmkörper zur zumindest teilweisen Aufnahme des Batteriepols auf. Dies bedeutet, dass im kontaktieren Zustand sich der Batteriepol zumindest teilweise in der Batteriepolklemme befindet und sicher in dieser gehalten ist. Weiterhin sind ein Befestigungsteil, das bspw. als Schraube oder als Schnellverschluss ausgebildet ist, und ein Verriegelungsteil vorgesehen. Diese beiden Teile wirken zusammen und zwar so, dass der Batteriepol fest und sicher mit der Batteriepolklemme verbunden ist.

Zum Verbinden der Batteriepolklemme mit einem Batteriepol wird diese typischerweise auf diesen aufgesetzt und zwar auf eine Weise, dass dieser in der Batteriepolklemme zumindest teilweise aufgenommen wird. In einer Ausführung umfasst die Batteriepolklemme zwei gegenüberliegende Klemmbacken. Bei dieser Ausführung befindet sich der Batteriepolklemme nach dem Aufsetzen zwischen den beiden Klemmbacken. Anschließend wird das Befestigungsteil betätigt. Ist dieses als Schraube ausgebildet, so bedeutet Betätigen, dass diese Schraube angezogen wird. Dieses Betätigen des Befestigungsteils bzw. das Anziehen der Schraube bewirkt, dass das Verriegelungsteil, dass mit dem Befestigungsteil direkt bzw. unmittelbar oder indirekt bzw. mittelbar verbunden ist, um eine erste Schwenkachse schwenkt. Auf diese Weise wird bewirkt, dass das Verriegelungsteil mit zumindest einem Abschnitt fest gegen die Polklemme gepresst bzw. gedrückt wird. Typischerweise ist das Befestigungsteil mit dem Klemmkörper unmittelbar oder mittelbar verbunden. So wird durch Betätigen des Befestigungsteils über das Verriegelungsteil eine sichere Verbindung zwischen dem Klemmkörper und dem Batteriepol hergestellt. Diese sichere Verbindung kann durch Lösen des Befestigungsteils, bspw. durch Lösen einer Schraube, gelöst werden. Diese Befestigung bzw. Fixierung ist somit durch eine Art Verriegelung gesichert. Die erste Schwenkachse kann durch eine Lagerung des Verriegelungsteils definiert sein.

Die realisierte Verbindung ist derart, dass eine Relativbewegung zwischen dem Batteriepol und der Batteriepolklemme im montierten und gesicherten Zustand die Kraft, mit der das Verriegelungsteil an bzw. gegen den Batteriepol gedrückt bzw. gepresst wird, erhöht. Dies begründet die selbstsperrende Wirkung der vorgestellten Batteriepolklemme.

In einer Ausgestaltung, die auch unabhängig von den vorstehend erläuterten Ausführungen betrachtet werden kann, weist der Klemmkörper zwei sich gegenüberliegende Klemmbacken, zwischen denen der Batteriepol zumindest teilweise aufzunehmen ist, und zwei durch einen Spalt beabstandete Klemmteile, die jeweils mit einer der Klemmbacken verbunden sind, auf. In diesem Fall kann vorgesehen sein, dass das Verriegelungsteil zumindest teilweise in dem Spalt zwischen den beiden Klemmteilen des Klemmkörpers aufgenommen ist und auf beiden den Klemmteilen zugeordneten Seiten jeweils einen Arm aufweist. Die beiden Arme ragen jeweils in eine Ausnehmung in den Klemmteilen hinein, so dass ein Schwenken des Verriegelungsteils um mindestens eine zweite zu der ersten Schwenkachse senkrechte Schwenkachse begrenzt ist. Ein Schwenken der Batteriepolklemme um diese zweite Schwenkachse bewirkt, dass die Anpresskraft zwischen dem Batteriepol und dem Verriegelungsteil erhöht wird.

Die vorgestellte selbstsperrende Batteriepolklemme beruht darauf, dass eine Fixierung bzw. Befestigung zwischen dem Pol und dem Klemmmechanismus mittels einer Verriegelung anstelle eines Kontakts, der auf Reibung basiert, bereitgestellt wird. Der durch die beschriebene Batteriepolklemme verwirklichte Klemmmechanismus ist dazu in der Lage, höheren Belastungen als bekannte Batteriepolklemmen während der Laufzeit standzuhalten.

Die vorgestellte Batteriepolklemme hat, zumindest in einigen der Ausführungen, eine Reihe von Vorteilen. So kann diese die Aufnahme und Kontaktierung eines Batteriepols ermöglichen, wobei dies ohne eine plastische Verformung eines Körpers erreicht wird.

Weitere Vorteile und Ausgestaltungen der Erfindung ergeben sich aus der Beschreibung und den beigefügten Zeichnungen.

Es versteht sich, dass die voranstehend genannten und die nachstehend noch zu erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen

Figur 1 zeigt eine Ausführung der selbstsperrenden Batteriepolklemme in einer Gesamtansicht.

Figur 2 zeigt die Batteriepolklemme aus Figur 1 in verschiedenen Ansichten.

Figur 3 zeigt die Batteriepolklemme in einer Draufsicht.

Figur 4 zeigt in einem Kräftediagramm einen selbstsperrenden Klemmmechanismus.

Figur 5 zeigt in einer schematischen Darstellung den selbstsperrenden Klemmmechanismus.

Figur 6 zeigt in weiteren schematischen Darstellungen den selbstsperrenden Klemmmechanismus.

Figur 7 zeigt in weiteren Ansichten die vorgestellte Batteriepolklemme.

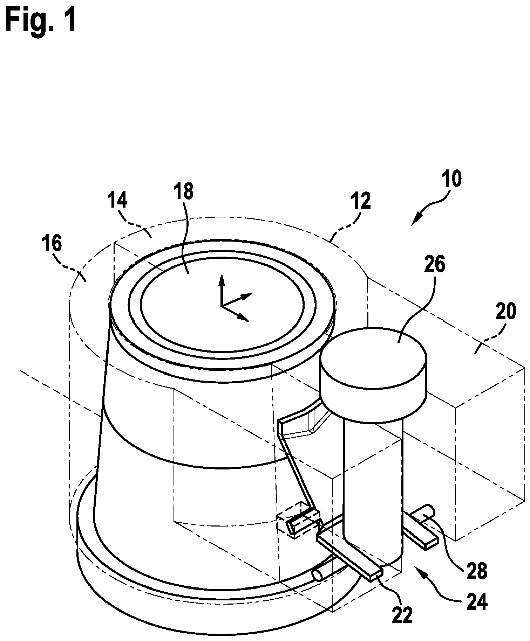

Figur 1 zeigt in einer perspektivischen Gesamtdarstellung eine Ausführung der vorgestellten Batteriepolklemme, die insgesamt mit der Bezugsziffer 10 bezeichnet ist. Die Darstellung zeigt einen Klemmkörper 12, der einen ersten Klemmbacken 14 und einen zweiten Klemmbacken 16, zwischen denen ein Batteriepol 18 aufgenommen ist, umfasst. An dem ersten Klemmbacken 14 ist ein erstes Klemmteil 20 und an dem zweiten Klemmbacken 16 ist ein zweites Klemmteil 22 angeformt, zwischen denen ein Spalt 24 vorgesehen ist. In diesem Spalt 24 sind ein Befestigungsteil 26, in diesem Fall eine Schraube, und ein Verriegelungsteil 28 vorgesehen.

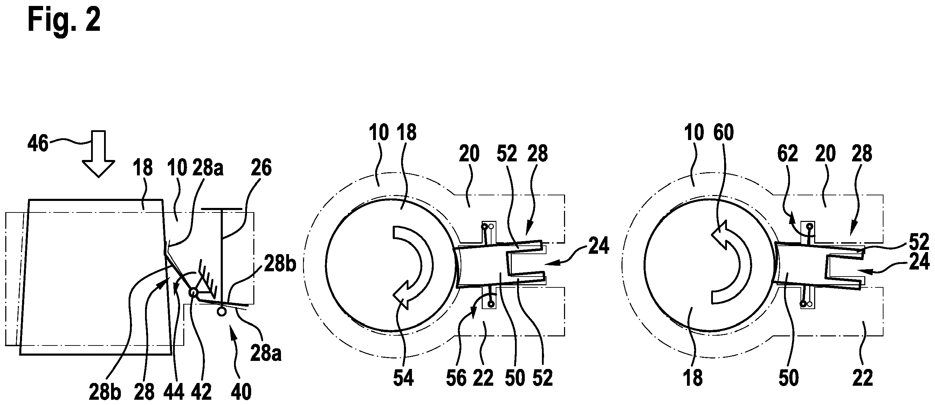

Es wird nunmehr angestrebt, den Batteriepol 18 fest mit der Batteriepolklemme 10 zu verbinden, so dass ein dauerhafter und fester Kontakt zwischen dem Batteriepol 18 und der Batteriepolklemme 10 sichergestellt ist. Hierzu wirken das Befestigungsteil 26 und das Verriegelungsteil 28 zusammen. Auf dieses Zusammenwirken wird nachfolgend in Verbindung mit der Figur 2 näher eingegangen.

Figur 2 verdeutlicht die Funktionsweise der Batteriepolklemme 10, die zur Aufnahme und zum Kontaktieren des Batteriepols 18 dient. Die Darstellung zeigt auf der linken Seite in einer Schnittansicht das Befestigungsteil 26 und das Verriegelungsteil 28, wobei das Befestigungsteil 26, das in diesem Fall als Schraube ausgebildet ist, mit einem unteren Abschnitt 40 des Verriegelungsteils 28 in Gewindeeingriff ist. Ein Anziehen der Schraube bzw. des Befestigungsteils 26 bewirkt ein Anheben des unteren Abschnitts 40 und damit ein Schwenken des Verriegelungsteils 28 um eine erste Schwenkachse 42 in Richtung eines Pfeils 44 von einer ersten Position 28a in eine zweite Position 28b. Für den Gewindeeingriff verfügt das Verriegelungsteil 28 bspw. über eine Bohrung mit Innengewinde, die dem Außengewinde der Schraube angepasst ist, oder über eine Öffnung bzw. Ausstanzung, die so dimensioniert ist, dass das Gewinde der Schraube in Gewindeeingriff mit dieser Öffnung ist.

Ein weiterer Pfeil 46 verdeutlicht eine Relativbewegung des Batteriepols 18 zu der Batteriepolklemme 10 aufgrund einer Abzugkraft, was bewirkt, dass dich das Verriegelungsteil 28 von der ersten Position 28a zu der zweiten Position 28b bewegt und somit die Kraft, mit der das Verriegelungsteil 28 an den Batteriepol 18 gedrückt wird erhöht, was wiederum zu einer stärkeren Verbindung zwischen dem Batteriepol 18 und der Batteriepolklemme 10 führt. Die durch Pfeil 46 verdeutlichte Relativbewegung erhöht somit die Anpresskraft.

Figur 2 zeigt in der Mitte den Batteriepol 18, die Batteriepolklemme 10 und das Verriegelungsteil 28 zur Verdeutlichung eines Losbrechmoments. Die Darstellung zeigt das Verriegelungsteil 28, das ein Basisteil 50 und zwei sich gegenüberliegende mit dem Basisteil 50 verbundene Schenkel 52. Ein Verdrehen der Batteriepolklemme 10, was zu einer Relativbewegung des Batteriepols 18 gemäß Pfeil 54 führt, bewirkt ein Schwenken des Verriegelungsteils 28 gemäß Pfeil 56 und ein Drücken mit erhöhter Kraft des Verriegelungsteils 28 gegen den Batteriepol 18.

Figur 2 zeigt auf der rechten Seite ein Verdrehen in die entgegengesetzt Richtung, was zu einer Relativbewegung des Batteriepols 18 gemäß Pfeil 60 und einer Schwenkbewegung des Verriegelungsteils 28 gemäß Pfeil 62 führt. Auch hier erhöht das Verdrehen ein Erhöhen der Kraft, mit der das Verriegelungsteil 28 gegen den Batteriepol 18 gedrückt wird.

In beiden Fällen ist die Schwenkbewegung dadurch begrenzt, dass einer der beiden Schenkel 52 in dem Spalt 24 an die Innenseite eines der beiden Klemmteile 20 bzw. 22 anstößt.

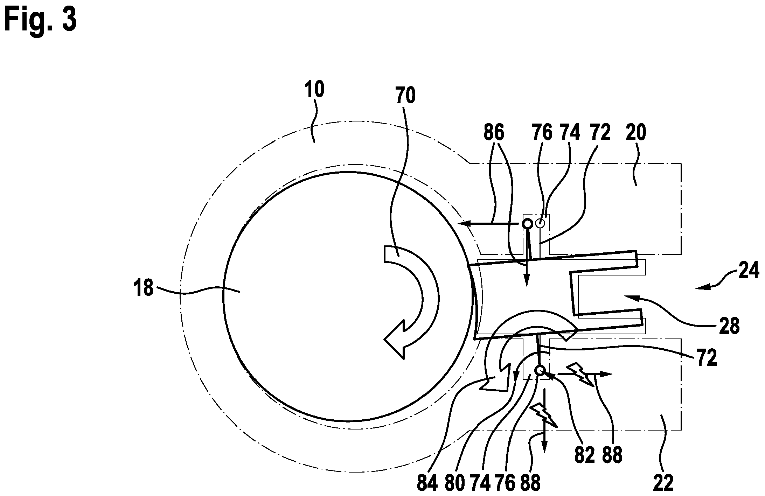

Figur 3 verdeutlicht in einer vergrößerten Darstellung die Schwenkbewegung des Verriegelungsteils 28 im Spalt 24 zwischen den beiden Klemmteilen 20, 22 bei einer Relativbewegung des Batteriepols 18 gemäß Pfeil 70. Hierbei weist das Verriegelungsteil 28 an gegenüberliegenden Seiten Arme 72 auf, von denen jeder in eine Ausnehmung 74 eingreift. Dabei ist in jedem der beiden Klemmteile 20 bzw. 22 jeweils eine Ausnehmung 74 vorgesehen. Bei der dieser Schwenkbewegung bewegen sich die Arme 72, an deren Enden jeweils eine Abrundung 76 vorgesehen ist, innerhalb der zugeordneten Ausnehmung 74. Ein erster Pfeil 80 verdeutlicht die Schwenkbewegung des Verriegelungsteils 28 um eine zweite Schwenkachse 82. ein zweiter Pfeil 84 verdeutlicht eine ermöglichte freie Drehbewegung. Dritte Pfeile 86 zeigen Richtungen an, in denen eine Bewegung ermöglicht ist. Durchgestrichene Pfeile 88 zeigen Richtungen, in denen eine Bewegung nicht möglich ist. Die Ausführung der Batteriepolklemme 10 mit den Armen 72 und den Ausnehmungen 74 kann auch unabhängig von anderen hierin beschriebenen Ausführungen und unabhängig vom Gegenstand des Anspruchs 1 betrachtet werden.

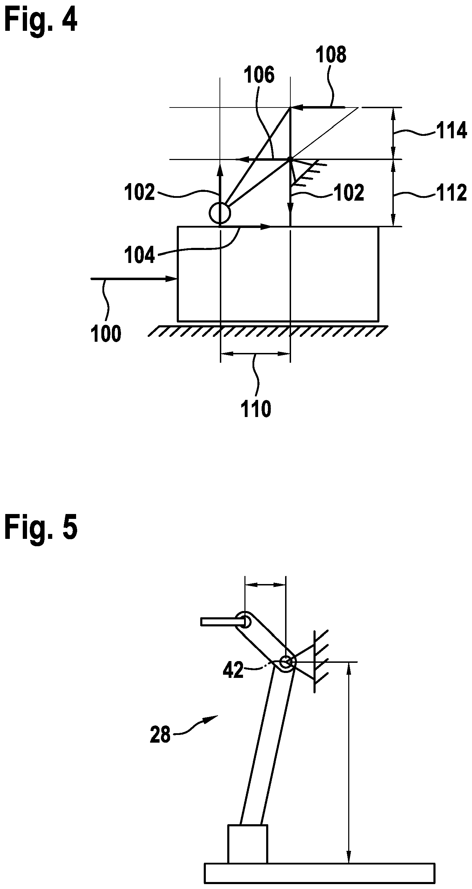

Figur 4 zeigt mathematische Zusammenhänge bei dem verwirklichten Klemmmechanismus. Mit Pfeilen verdeutlicht sind folgende Größen:

L 100
N 102
S 104
C 106
A 108
a 110
b 112
c 114

Es gilt:

$$aN = bS + cA$$

$$A \cong 0$$

$$\mu \geq \frac{S}{N} = \frac{a}{b}$$

Der Reibungskoeffizient $\mu$ ist ein dimensionsloses Maß für die Reibungskraft im Verhältnis zur Anpresskraft zwischen zwei Körpern.

Der Klemmmechanismus stellt somit ein Beispiel für einen selbstsperrenden Mechanismus dar. Das Kriterium ist zwar nicht vollständig unabhängig von einer Vorbelastungskraft. Wenn jedoch gilt

$$\mu >= a/b$$

dann funktioniert das Selbstsperren mit einer sehr geringen Vorbelastung.

Figur 5 zeigt das Verriegelungsteil 28, das um die erste Schwenkachse 42 schwenkbar ist.

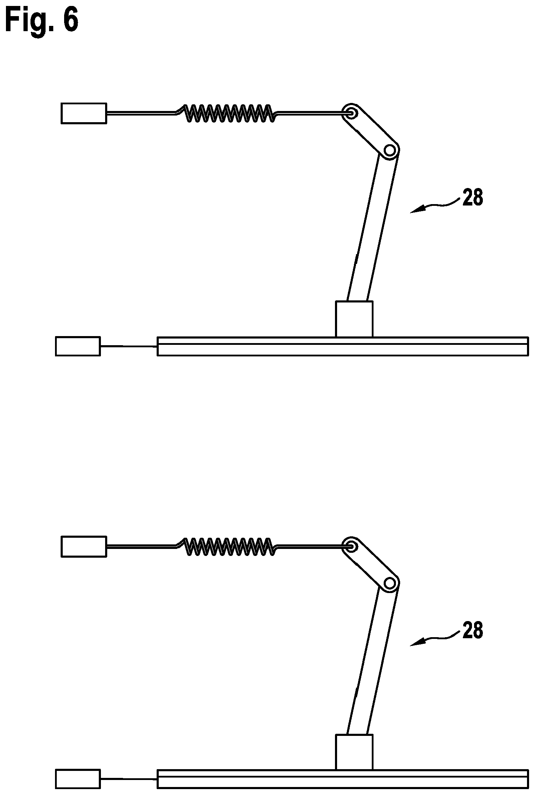

Figur 6 zeigt das Verriegelungsteil 28 bei $\mu = 0,19$ oben und $\mu = 0.21$ unten.

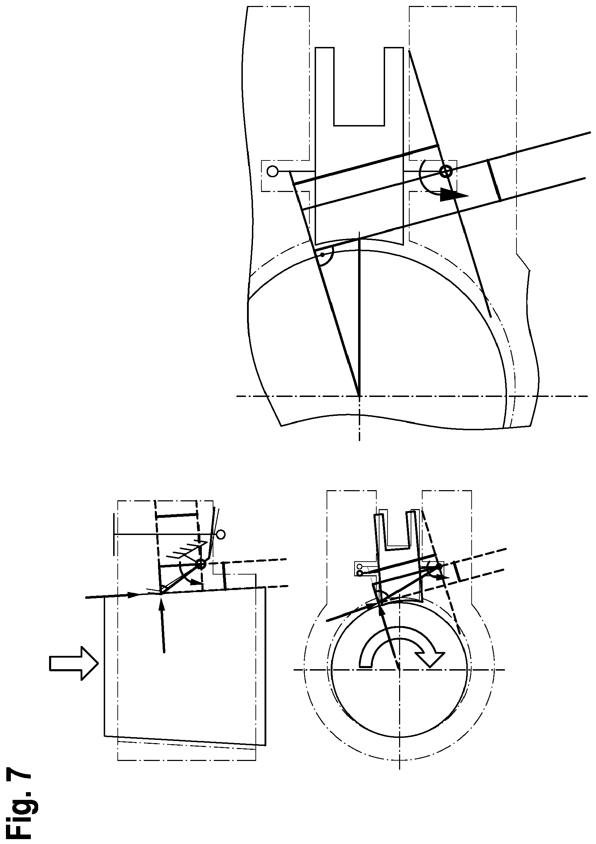

Figur 7 verdeutlicht noch einmal die Schwenkbewegung des Verriegelungsteils.

**Patentansprüche**

1. Selbstsperrende Batteriepolklemme (10) mit einem Klemmkörper (12) zur zumindest teilweise Aufnahme eines Batteriepols (18), einem Befestigungsteil (26) und einem Verriegelungsteil (28), wobei das Verriegelungsteil (28) dazu eingerichtet ist, an den Batteriepol (18) anzugreifen, und wobei das Befestigungsteil (26) derart mit dem Verriegelungsteil (28) zusammenwirkt, dass ein Betätigen des Befestigungsteils (26) ein Schwenken des Verriegelungsteils (28) um eine erste Schwenkachse (42) bewirkt.

2. Selbstsperrende Batteriepolklemme (10) nach Anspruch 1, bei der das Befestigungsteil (26) als Schraube ausgebildet ist und ein Anziehen der Schraube die Schwenkbewegung des Verriegelungsteils (28) um die erste Schwenkachse (42) bewirkt.

3. Selbstsperrende Batteriepolklemme (10) nach Anspruch 1, bei der das Befestigungsteil (26) als Schnellverschluss ausgebildet ist, dessen Betätigung die Schwenkbewegung des Verriegelungsteils (28) um die erste Schwenkachse (42) bewirkt.

4. Selbstsperrende Batteriepolklemme (10) nach einem der Ansprüche 1 bis 3, bei der das Verriegelungsteil (28) als Schmiedeteil ausgebildet ist.

5. Selbstsperrende Batteriepolklemme (10) nach einem der Ansprüche 1 bis 3, bei der das Verriegelungsteil (28) als Blechteil ausgebildet ist.

6. Selbstsperrende Batteriepolklemme (10) nach einem der Ansprüche 1 bis 3, bei der das Verriegelungsteil (28) aus einem elektrisch nicht leitfähigen Material gefertigt ist.

**7.** Selbstsperrende Batteriepolklemme (10) nach einem der Ansprüche 1 bis 6, bei der das Verriegelungsteil (28) dazu eingerichtet ist, elastische Energie zu speichern.

**8.** Selbstsperrende Batteriepolklemme (10) nach einem der Ansprüche 1 bis 7, bei der der Klemmkörper (12) zwei gegenüberliegende Klemmbacken (14, 16), zwischen denen der Batteriepol (18) zumindest teilweise aufzunehmen ist, und zwei durch einen Spalt beabstandete Klemmteile (20, 22), die jeweils mit einer der Klemmbacken (14, 16) verbunden sind, umfasst.

**9.** Selbstsperrende Batteriepolklemme (10) nach Anspruch 8, bei der das Verriegelungsteil (28) zumindest teilweise in dem Spalt zwischen den beiden Klemmteilen (20, 22) des Klemmkörpers (12) aufgenommen ist und auf beiden den Klemmteilen (20, 22) zugeordneten Seiten jeweils einen Arm (72) aufweist, wobei die beiden Arme (72) jeweils in eine Ausnehmung (74) in den Klemmteilen (20, 22) hineinragen, so dass ein Schwenken des Verriegelungsteils (28) um mindestens eine zweite zu der ersten Schwenkachse (42) senkrechte Schwenkachse (82) begrenzt ist.

**10.** Selbstsperrende Batteriepolklemme (10) nach Anspruch 8 oder 9, bei der das Befestigungsteil (26) zumindest teilweise in dem Spalt zwischen den beiden Klemmteilen (20, 22) des Klemmkörpers (12) aufgenommen ist.

# Fig. 1

# Fig. 2

Fig. 3

# Fig. 4

# Fig. 5

# Fig. 6

Fig. 7

Europäisches
Patentamt

European
Patent Office

Office européen
des brevets

# EUROPÄISCHER RECHERCHENBERICHT

**Nummer der Anmeldung**

EP 18 19 2691

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H08 124551 A (YAZAKI CORP) 17. Mai 1996 (1996-05-17) | 1-8,10 | INV. H01R11/28 |
| A | * Abbildungen 1-7 * | 9 | |
| X | JP 2006 236901 A (SUMITOMO WIRING SYSTEMS) 7. September 2006 (2006-09-07) * Abbildungen 1-28 * | 1,2 | ADD. H01R4/48 |
| X | EP 0 632 530 A1 (SUMITOMO WIRING SYSTEMS [JP]) 4. Januar 1995 (1995-01-04) * Abbildungen 1-10 * | 1,2 | |
| X | JP 2006 190547 A (SUMITOMO WIRING SYSTEMS) 20. Juli 2006 (2006-07-20) * Abbildungen 1-7 * | 1 | |
| X | JP H10 302758 A (YAZAKI CORP) 13. November 1998 (1998-11-13) * Abbildungen 1-4 * | 1 | |
| X | EP 1 162 692 A2 (YAZAKI CORP [JP]) 12. Dezember 2001 (2001-12-12) * Abbildungen 1-21 * | 1,3 | **RECHERCHIERTE SACHGEBIETE (IPC)** H01R |

Der vorliegende Recherchenbericht wurde für alle Patentansprüche erstellt

| Recherchenort | Abschlußdatum der Recherche | Prüfer |
|---|---|---|
| Den Haag | 14. Februar 2019 | Ferreira, João |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument

  .........................................................................................

& : Mitglied der gleichen Patentfamilie, übereinstimmendes
 Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 19 2691

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-02-2019

| Im Recherchenbericht angeführtes Patentdokument | Datum der Veröffentlichung | Mitglied(er) der Patentfamilie | Datum der Veröffentlichung |
|---|---|---|---|
| JP H08124551 A | 17-05-1996 | JP 3084192 B2<br>JP H08124551 A | 04-09-2000<br>17-05-1996 |
| JP 2006236901 A | 07-09-2006 | JP 4706901 B2<br>JP 2006236901 A | 22-06-2011<br>07-09-2006 |
| EP 0632530 A1 | 04-01-1995 | DE 69404393 D1<br>DE 69404393 T2<br>EP 0632530 A1<br>JP 2924561 B2<br>JP H06333555 A<br>US 5486434 A | 28-08-1997<br>26-02-1998<br>04-01-1995<br>26-07-1999<br>02-12-1994<br>23-01-1996 |
| JP 2006190547 A | 20-07-2006 | KEINE | |
| JP H10302758 A | 13-11-1998 | JP 3434666 B2<br>JP H10302758 A | 11-08-2003<br>13-11-1998 |
| EP 1162692 A2 | 12-12-2001 | DE 60133063 T2<br>EP 1162692 A2<br>US 2001051469 A1 | 26-02-2009<br>12-12-2001<br>13-12-2001 |

EPO FORM P0461

Für nähere Einzelheiten zu diesem Anhang : siehe Amtsblatt des Europäischen Patentamts, Nr.12/82